(19) 

**Europäisches Patentamt**
**European Patent Office**
**Office européen des brevets**

(11) **EP 4 197 657 A1**

(12) **EUROPEAN PATENT APPLICATION**
published in accordance with Art. 153(4) EPC

(43) Date of publication:
**21.06.2023 Bulletin 2023/25**

(21) Application number: **21855934.2**

(22) Date of filing: **05.08.2021**

(51) International Patent Classification (IPC):
**B08B 3/08** *(2006.01)*    **C11D 17/06** *(2006.01)*
**C08L 25/04** *(2006.01)*    **C08L 67/00** *(2006.01)*
**C08L 101/00** *(2006.01)*    **C11D 1/66** *(2006.01)*
**C11D 3/37** *(2006.01)*    **B29C 33/72** *(2006.01)*

(52) Cooperative Patent Classification (CPC):
**C11D 1/66; B08B 3/08; B29C 33/72; C08L 25/04;**
**C08L 67/00; C08L 101/00; C11D 3/37;**
**C11D 11/0041; C11D 17/06**

(86) International application number:
**PCT/JP2021/029198**

(87) International publication number:
**WO 2022/034855 (17.02.2022 Gazette 2022/07)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **13.08.2020 JP 2020136764**

(71) Applicant: **Asahi Kasei Kabushiki Kaisha**
**Tokyo 1000006 (JP)**

(72) Inventors:
• **NOBE Yohei**
  **Tokyo 100-0006 (JP)**
• **IWAI Takafumi**
  **Tokyo 100-0006 (JP)**
• **ENDO Shigeru**
  **Tokyo 100-0006 (JP)**

(74) Representative: **D Young & Co LLP**
**120 Holborn**
**London EC1N 2DY (GB)**

(54) **CLEANING AGENT FOR RESIN PROCESSING MACHINES**

(57)    A purging compound for removing a processing residue comprising a resin (C) to be purged, from a resin processing machine, comprising: a thermoplastic resin (A) and a non-ionic additive (B) of the following Formula (I) having a melting or softening point of lower than 150 °C:

$$R_n\text{-}X \ldots \quad (I)$$

(where R is a hydrophobic organic group, n is an integer of 1 or more, and X is a polar group), wherein a MFR (280 °C and a load of 2.16 kg) is 30 g/10 min or less, the difference of the solubility parameter between the resin (A) and the resin (C) is +1.6 to -1.6 $(cal/cm^3)^{1/2}$, the difference of the solubility parameter between the additive (B) and the resin (C) is +1.6 to -1.6 $(cal/cm^3)^{1/2}$, and the difference of the solubility parameter between the additive (B) and the hydrophobic organic group R is 0.7 $(cal/cm^3)^{1/2}$ or more.

Processed by Luminess, 75001 PARIS (FR)

EP 4 197 657 A1

**Description**

TECHNICAL FIELD

The present disclosure relates to a purging compound for a resin processing machine.

BACKGROUND

Resin processing machines such as an extruder and an injection molding machine are commonly used for processes such as coloring, compounding, and molding of resins. In this type of processing machine, degraded products (for example, thermally decomposed products, carbonized products, etc.) generated from a resin or the like, as well as resins and additives such as a dye and a pigment processed in a prescribed molding process, remain in the processing machine after the process. If these residues are left in the machine, they may, for example, mix with the materials for subsequent processes and cause appearance defects in a resulting product or other problems. Particularly in the case of molding a transparent resin, even only a small amount of mixed residue would cause notable appearance defects in a resulting product, because the residues lower the transparency of the resulting product. Accordingly, techniques for achieving complete removal of residues out of molding machines have been desired. In particular, molds having complex hot runner structures that have multiple cavities used for molding a large number of products simultaneously often have the problem of susceptibility to deposit of a resin and other stains in flow paths thereof.

Conventional methods to remove such residues from a processing machine include a method in which the processing machine is disassembled and cleaned manually or the so-called replacement (or purging) work in which, the inside of the machine is cleaned by filling the machine with a molding material to be subsequently used (hereinafter referred to as "subsequent material") without stopping the machine, so that the subsequent material is discharged together with residues. In addition, other methods, such as a cleaning method of introducing a purging compound into the processing machine and performing cleaning inside the processing machine, are also used.

Among these methods, the method of using a purging compound has been favorably used in recent years because it has excellent cleanability to remove the residues from inside the processing machine. Although the constituents of a purging compound include various components, the main constituents often include resins, additives such as surfactants, and scrubbing materials such as inorganic substances.

For example, PTL 1 employs a blend of subsequent material resin and a purging compound (master batch) containing a fatty acid amide compound as an active ingredient. PTL 2 discloses a purging compound containing a styrene-acrylonitrile copolymer resin, an alkyl sulfonate, and an alkylene glycol fatty acid ester. In addition, PTL 3 proposes a purging resin composition which is obtained by blending a sodium alkylbenzenesulfonate and a water-repellent compound (e.g., a metal salt of a higher fatty acid, wax, fluid paraffin, synthetic wax) with a thermoplastic resin. PTL 4 proposes a purging resin composition which is obtained by blending polystyrene with a neutral salt of an alkylbenzenesulfonic acid and a mold releasing compound.

CITATION LIST

Patent Literature

PTL 1: JP 4954397 B
PTL 2: JP 4376648 B
PTL 3: JP S62-195045 A
PTL 4: JP H02-206636 A

SUMMARY

(Technical Problem)

However, the purging compound in the PTL 1 has a problem in that the fatty acid amide compound and other compounds become inhomogeneous in a molding machine, resulting in contamination in the vicinity of a hopper and poor feedability of the purging compound. In addition, when the subsequent material is made to flow through a complex hot runner, the purging compound is not sufficiently mixed with the resin in the subsequent material, resulting in an unsatisfactory cleaning effect.

The purging compounds in PTL 2 to 4 fail to provide sufficient cleaning effects because of reduced cleanability due to stickiness caused by moisture absorption and over-slipping on the surface of stains caused by excessive manifestation of the lubrication effect of ionic surfactants.

As described above, it is extremely difficult to clean inside a complex hot runner efficiently even with a purging compound, and countermeasures such as disassembling a mold may be required in some cases.

Accordingly, an object of the present disclosure is to provide a purging compound for a resin processing machine which can clean the inside of a cylinder and even the inside of a complex hot runner favorably even when molding is being carried out.

(Solution to Problem)

As a result of diligent study to solve the aforementioned problem, the present inventors have focused on the solubility parameters and the melt flow rate (MFR), and have discovered that a purging compound for a resin processing machine which has well-balanced flowability and compatibility of a resin and additive components can solve the above problem, thereby completing the present disclosure.

Specifically, the present disclosure is as follows.

[1] A purging compound for removing a processing residue comprising a resin (C) to be purged, from a resin processing machine, the purging compound comprising:

a thermoplastic resin (A) and a non-ionic additive (B) represented by the following Formula (I) having a melting point or a softening point of lower than 150 °C:

$$Rn\text{-}X \dots \qquad (I)$$

(in Formula (I), R is a hydrophobic organic group, n is an integer of 1 or more, and X is a polar group), wherein a melt flow rate (MFR) under conditions of 280 °C and a load of 2.16 kg is 30 g/10 min or less, a difference (SP1 - SP2) between a solubility parameter (SP1) of the thermoplastic resin (A) and a solubility parameter (SP2) of the resin (C) to be purged is from +1.6 to -1.6 $(cal/cm^3)^{1/2}$, a difference (SP3 - SP2) between a solubility parameter (SP3) of the non-ionic additive (B) and the SP2 is from +1.6 to -1.6 $(cal/cm^3)^{1/2}$, and a difference (SP3 - SP4) between the SP3 and a solubility parameter (SP4) of the hydrophobic organic group R is 0.7 $(cal/cm^3)^{1/2}$ or more.

[2] The purging compound for a resin processing machine according to [1], wherein the thermoplastic resin (A) comprises at least one selected from the group consisting of a styrene-based resin and a polyester-based resin.

[3] The purging compound for a resin processing machine according to [1] or [2], wherein the thermoplastic resin (A) comprises a styrene-based resin or a polyester-based resin, and a content of the styrene-based resin or the polyester-based resin in the purging compound for a resin processing machine is 40 % by mass or more.

[4] The purging compound for a resin processing machine according to any one of [1] to [3], wherein the non-ionic additive (B) comprises a lubricant or a surfactant, and a content of the lubricant or the surfactant in the purging compound for a resin processing machine is 10% by mass or less.

[5] The purging compound for a resin processing machine according to any one of [1] to [4], wherein the SP1 and the SP3 are from 9 to 11 $(cal/cm^3)^{1/2}$.

[6] The purging compound for a resin processing machine according to any one of [1] to [5], wherein the resin (C) to be purged is a styrene-based resin and/or a polyester-based resin.

[7] A method of cleaning an inside of a resin processing machine, the method comprising using the purging compound for a resin processing machine according to any one of [1] to [6].

[8] Use of the purging compound for a resin processing machine according to any one of [1] to [6] in cleaning of a resin processing machine.

(Advantageous Effect)

According to the present disclosure, it is possible to provide a purging compound for a resin processing machine which can clean the inside of a cylinder and even the inside of a complex hot runner favorably even when molding is being carried out.

DETAILED DESCRIPTION

The following provides a detailed description of an embodiment of the present disclosure (hereinafter, referred to as the "present embodiment"). Note that the following embodiment is an example for explaining the present disclosure and that the present disclosure is not limited to the embodiment. Furthermore, various modifications may be made to the present disclosure without departing from the gist thereof.

<Purging compound for resin processing machine>

A purging compound for a resin processing machine of the present embodiment (hereinafter simply referred to as "purging compound") is a purging compound for removing a processing residue including a resin (C) to be purged from a resin processing machine, and contains a thermoplastic resin (A) and a non-ionic additive (B) represented by the following Formula (I) having a melting point or a softening point of lower than 150 °C:

$$R_n\text{-}X \ldots \qquad (I)$$

(in Formula (I), R is a hydrophobic organic group, n is an integer of 1 or more, and X is a polar group),
wherein the melt flow rate (MFR) under conditions of 280 °C and a load of 2.16 kg is 30 g/10 min or less, the difference (SP1 - SP2) between the solubility parameter (SP1) of the thermoplastic resin (A) and the solubility parameter (SP2) of the resin (C) to be purged is from +1.6 to -1.6 $(\text{cal/cm}^3)^{1/2}$, the difference (SP3 - SP2) between the solubility parameter (SP3) of the non-ionic additive (B) and SP2 is from +1.6 to -1.6 $(\text{cal/cm}^3)^{1/2}$, and the difference (SP3 - SP4) between SP3 and the solubility parameter (SP4) of the hydrophobic organic group R is 0.7 $(\text{cal/cm}^3)^{1/2}$ or more.

The purging compound for a resin processing machine of the present embodiment can be used at the end of a molding work by a processing machine for a thermoplastic resin to remove processing residues including the resin used in the work (the resin (C) to be purged), additives such as a dye and a pigment, and degraded products generated from the resin and other materials. In particular, in a molding machine having a multi-cavity hot runner capable of producing a large number of products, it is possible to clean not only the insides of a cylinder and a screw, but also the inside of a hot runner which has complex flow paths while the molding operation is being carried out.

The present inventors have focused on the relationship between the polarity of the resin used in molding, which is the main cause of contamination in a resin processing machine, and the polarity of the resin and additives that compose a purging compound, and discovered that the solubility parameters determined by the Fedoros' estimation method can be used as means for representing the polarity. Specifically, we have discovered that it is possible to define from the solubility parameters the fact that the closer the resins used in molding is to the constituent resin of the purging compound (the more compatible they are), the easier discharge of stains becomes. We have also discovered that additives in a purging compound are also important to promote compatibilization of the resins and need to be defined by the solubility parameters.

In the present disclosure, the above solubility parameters (SP values) of the thermoplastic resin (A), the non-ionic additive (B), and the resin (C) to be purged are calculated based on the Fedors' estimation method (R. F. Fedors, Polym. Eng. Sci., 14(2), 147-154 (1974), hereinafter "Fedors literature") according to the following formula.

$$\text{Fedors' formula: SP value } [(\text{cal/cm}^3)^{1/2}] = (E_v/v)^{1/2} = (\ \Sigma\Delta e_i/\Sigma\Delta v_i)^{1/2},$$

$E_v$: the evaporation energy [cal/mol],
$v$: the molar volume [$\text{cm}^3$/mol],
$\Delta e_i$: the evaporation energy of the atom or atomic group of each component [cal/mol], and
$\Delta v_i$: the molar volume of each atom or atomic group [$\text{cm}_3$/mol].

In the aforementioned Fedors literature, the evaporation energy and the molar volume used in the above formula are the values at 25 °C. The aforementioned Fedors literature describes that the SP value of a resin is temperature dependent, and the temperature at which the resin is used and the volume expansion coefficient $\alpha$ of the resin satisfy the relationship expressed by the following equation.

$$\text{SP value at use temperature } [(\text{cal/cm}^3)^{1/2}] = \text{SP value at 25 °C}$$

$$[(\text{cal/cm}^3)^{1/2}] \times [1 + 1.13 \times \alpha \times (T1 - T2)]$$

α: the volume expansion ratio (coefficient of volume expansion) [1/K]
T1: 298 [K] (25 °C)
T2: the actual temperature in use [K].

In the present disclosure, the SP values of the thermoplastic resin (A) and the resin (C) to be purged (SP1 and SP2) are calculated at use temperatured, and the SP value (SP3) of the non-ionic additive (B) is calculated at 25 °C.

In light of the above, the thermoplastic resin (A) and the non-ionic additive (B) are selected according to the type of the resin (C) to be purged, which is processing residues (stains) in the resin processing machine. Because the SP value can be calculated based on the Fedors' estimation method, the combination of the thermoplastic resin (A) and the non-ionic additive (B) can be determined based on the SP values which have been calculated in advance.

The following describes the respective components of the purging compound for a resin processing machine of the present embodiment in detail.

<Thermoplastic resin (A)>

The thermoplastic resin (A) included in the purging compound for a resin processing machine of the present embodiment is not specifically limited as long as the SP value (SP1) thereof satisfies the certain conditions to be described below, and examples thereof include a styrene-based resin, a polyester-based resin, a polyolefin-based resin, a polyamide-based resin, a cellulose-based resin, polycarbonate, and a polymethacrylic acid ester.

The thermoplastic resin (A) may be one resin or may be a combination of two or more resins.

The difference (SP1 - SP2) between the SP value (SP1) of the thermoplastic resin (A) and the SP value (SP2) of the resin (C) to be purged is from +1.6 to -1.6 $(cal/cm^3)^{1/2}$, preferably from +1.2 to -1.2 $(cal/cm^3)^{1/2}$, and more preferably from +1.0 to -1.0 $(cal/cm^3)^{1/2}$. When SP1 - SP2 is within any of thr above ranges, a good compatibility between the thermoplastic resin (A) and the resin (C) to be purged and an excellent cleaning effect can be achieved.

Further, the SP value (SP 1) of the thermoplastic resin (A) is not limited as long as SP1 - SP2 is within any of the above ranges, but is preferably from 9 to 11 $(cal/cm^3)^{1/2}$ so as to be close to the solubility parameters of generally-used engineering plastics.

For example, for cleaning a multi-cavity hot runner to mold preforms for bottles, the resin (C) to be purged is typically polyethylene terephthalate. Accordingly, the thermoplastic resin (A) is preferably polyethylene terephthalate, polybutylene terephthalate, a styrene-based resin, or polycarbonate having an SP value particularly close to that of polyethylene terephthalate.

Examples of the styrene-based resin include polystyrene or a copolymer of styrene and one or more other monomers having a styrene content of 50% by mass or more, for example. Examples of other monomers copolymerized with styrene include acrylonitrile, butadiene, isoprene, methyl acrylate, and methyl methacrylate, for example. Specific examples of the styrene-based resin include polystyrene, a styrene-acrylonitrile copolymer, a styrene-butadiene-acrylonitrile copolymer, a styrene-isoprene copolymer, and a styrene-methyl methacrylate copolymer. Among these, a styrene-acrylonitrile copolymer and a styrene-butadiene-acrylonitrile copolymer are preferred.

The SP values of typical thermoplastic resins are as follows (in $(cal/cm^3)^{1/2}$). The SP values vary depending on the use temperature as described above. The values enumerated here are based on the above-mentioned calculation formula, assuming the use temperature of 280 °C. Polystyrene: 9.3, a styrene-acrylonitrile copolymer (ratio of styrene:acrylonitrile is 70:30): 9.9, a styrene-butadiene-acrylonitrile copolymer (ratio of styrene:butadiene:acrylonitrile is 45:30:25): 9.8, polycarbonate: 9.9, polyethylene: 8.1, polyamide (66): 11.1, polyethylene terephthalate: 10.8, and polybutylene terephthalate: 10.6

The content of the thermoplastic resin (A) is preferably 30% by mass or more, more preferably 50% by mass or more, and even more preferably 70% by mass or more, with respect to 100% by mass of the purging compound for a resin processing machine. When the content of the thermoplastic resin (A) is within any of the above ranges, replacement of the resin component of the purging compound remaining in a machine by the resin of the subsequent material is promoted.

In particular, when the thermoplastic resin (A) contains a styrene-based resin or a polyester-based resin, the content of the styrene-based resin or the polyester-based resin is preferably 20% or more, more preferably 40% or more, and even more preferably 60% or more, with respect to 100% by mass of the purging compound for a resin processing machine. When the content of the styrene-based resin or the polyester-based resin is within any of the above ranges, a better cleaning effect on stains deposited on metal surfaces is achieved.

<Non-ionic additive (B)>

The non-ionic additive (B) contained in the purging compound for a resin processing machine of the present embodiment) (hereinafter simply referred to as "additive (B)") is not limited as long as it has the structure represented by the following formula (I), has a melting point or a softening point of lower than 150 °C, and has an SP value (SP3) that satisfies the certain conditions to be described below:

$$Rn\text{-}X \ldots \qquad (I)$$

(in Formula (I), R is a hydrophobic organic group, n is an integer of 1 or more, and X is a polar group).

One non-ionic additive (B) may be used alone or a combination of two or more may be used.

The present inventors have discovered that the non-ionic additive (B) is also important to promote compatibilization between the thermoplastic resin (A) and the resin (C) to be purged and needs to be defined by the solubility parameter. In addition, because addition of the non-ionic additive (B) reduces residues of the purging compound per se in a processing machine, a cleaning performance superior to conventional methods is achieved. In addition, because the purging compound flows efficiently even through a complex hot runner, efficient removal of deposited processing residues (stains) is achieved. The purging compound can flow smoothly in a hot runner and the purging compound per se is less likely to remain in the hot runner, which enables the cleaning method to be performed while molding is being carried out, thereby achieving further improvement in the efficiency of the cleaning work.

The difference (SP3 - SP2) between the SP value (SP3) of the non-ionic additive (B) and the SP value (SP2) of the resin (C) to be purged is from +1.6 to -1.6 $(cal/cm^3)^{1/2}$, preferably from +1.2 to -1.2 $(cal/cm^3)^{1/2}$, and more preferably from +1.0 to -1.0 $(cal/cm^3)^{1/2}$. When SP3 - SP2 is within any of the above ranges, the additive (B) has a good effect of penetrating into and floating the resin (C) to be purged which is processing residue (stain) in the resin processing machine. If SP3 - SP2 is out of any of these range, the compatibility between the thermoplastic resin (A) and the additive (B) tends to reduce and additive (B) is not homogenously mixed with the thermoplastic resin (A), resulting in an uneven cleaning effect.

Further, the difference (SP3 - SP4) between the SP value (SP3) of the non-ionic additive (B) and the SP value (SP4) of the hydrophobic organic group R of the non-ionic additive (B) is 0.7 $(cal/cm^3)^{1/2}$ or more. A larger value of SP3 - SP4 indicates a greater difference in the polarities between the hydrophobic organic group R and the polar group X, a stronger hydrophobic effect of the hydrophobic organic group R, and a higher hydrophobicity of the surface of the purging compound. As a result, adhesion of the purging compound to a metal is inhibited and the discharge characteristic of the purging compound is improved, which improves the non-remaining characteristic. If SP3 - SP4 is less than 0.7 $(cal/cm^3)^{1/2}$, this non-remaining characteristic is not sufficiently manifested. In other words, by controlling the values of SP3 and SP4, the compatibility of the thermoplastic resin (A) and the additive (B), the floating effect of the additive (B) on processing residues (stains), and inhibition of adhesion on a metal are well-balanced, as well as achieving uniform incorporation of the additive (B) into the thermoplastic resin (A).

Further, the SP value (SP3) of the non-ionic additive (B) is not limited as long as SP3 - SP2 and SP3 - SP4 satisfy the above ranges, but is preferably from 9 to 11 $(cal/cm^3)^{1/2}$, which is close to the solubility parameters of generally-used engineering plastics.

Examples of the hydrophobic organic group R include long-chain alkyl groups such as a stearyl group and an isostearyl group, amide groups, long-chain fluorocarbon groups, alkylbenzene groups, and 12-hydroxystearyl groups, for example.

Examples of the polar group X include a carboxy group, a hydroxy group, a thiol group, an ester group, a thioester group, a carbonyl group, an amino group, a formyl group, an acetal group, a cyano group, ether, and an alkoxy group.

In the case where the polar group X is a carboxy group, a hydroxy group, an ester group, or the like, candidates of the additive (B) include a lubricant and a surfactant such as commonly-used fatty acids, fatty acid esters, and fatty acid amides.

The hydrophobic organic group R and the polar group X may both have an oligomer or polymer structure as a substructure thereof, in which case the SP value (SP4) of the hydrophobic organic group R alone can be calculated.

The non-ionic additive (B) has a melting point or a softening point of lower than 150 °C. If the melting point or the softening point is 150 °C or higher, the additive (B) would not be uniformly blended during melt kneading with the thermoplastic resin (A) or would remain in a hot runner during cleaning. The melting point or the softening point of the additive (B) is preferably from 30 to 140 °C, more preferably from 60 to 130 °C. The additive (B) which is liquid at room temperature may also be used as long as it is uniformly mixed with the resin when being kneaded.

Note that ionic additives (surfactants, lubricants, etc.) are undesirable as an additive to the purging compound because the melting point tends to be increased and the cleanability tends to be reduced due to stickiness caused by moisture absorption and over-slipping on the surface of stains caused by excessive manifestation of the lubrication effect.

The content of the non-ionic additive (B) is not particularly limited, but is preferably 0.1 % by mass or more and 15% by mass or less, more preferably 0.2% by mass or more and 10% by mass or less, and even more preferably 0.5% by mass or more and 5% by mass or less, with respect to 100% by mass of the purging compound for a resin processing machine. If the content of the additive (B) is 10% or more by mass, the additive (B) would remain inside a resin processing machine or a hot runner and the additive (B) per se would be easily degrade, or the purging compound per se would exhibit a strong external lubricationeffect, which causes poor feedability when the purging compound is fed.

Typical non-ionic additives and their SP values are as follows (in $(cal/cm^3)^{1/2}$). The SP values of SP3 are enumerated, followed by the SP values of SP4 in parentheses: glyceryl stearate: 10.2 (8.3), stearic acid amide: 9.8 (8.3), ethylene bis stearic acid amide: 9.6 (8.3), stearyl alcohol: 9.5 (8.3), stearic acid: 9.1 (8.3), and isostearyl alcohol: 8.8 (7.7).

<Other components>

The purging compound for a resin processing machine of the present aspect may contain various other components depending on its purpose of cleaning and performances required for its application. Examples of other components include commonly-used inorganic fillers, polyethylene glycol, and antioxidants, for example.

The content of other components is preferably less than 10% by mass, preferably less than 5% by mass, and even more preferably less than 1% by mass, with respect to 100% by mass of the purging compound for a resin processing machine, for reducing the possibility of accumulation if they remains in a hot runner having complex flow channels.

<Production method of purging compound for resin processing machine>

Although there are no particular limitations on the production method of the purging compound for a resin processing machine of the present aspect, a preferred production method includes steps of melt kneading a resin composition containing the thermoplastic resin (A), the non-ionic additive (B), and other components to be blended as necessary using a melt kneading machine such as a kneader, an extruder, or a Banbury mixer; extruding the resultant melt kneaded product into strands, and then forming the strands into granular shape. The melt kneading machine used herein is preferably an extruder, more preferably a twin screw extruder, in view of their capability of sufficiently kneading the thermoplastic resin (A) and the additive (B). Use of a twin screw extruder facilitates uniform dispersion of the additive (B) into the thermoplastic resin (A), whereby the extrudability is stabilized and pulsation, etc. of the strands ejected from the extruder tends to be reduced.

Insufficient mixing, or non-uniform dispersion or only spreading of the additive (B) to the thermoplastic resin (A), such as in dry blending, may lead to not only insufficient cleaning performances such as uneven distribution or bleed-out inside a cylinder or a hot runner, adhesion of the additive (B) under a hopper, unevenness during molding and cleaning, overpack, etc., but may also lead to contamination or damage to a mold, including a hot runner.

During the compounding and melt kneading of each component, it is possible to use a commonly used apparatus. Examples thereof include premixing apparatuses such as a tumbler, a ribbon blender and a super mixer, and melt kneading machines such as a weight feeder, a single screw extruder or twin screw extruder, and a co-kneader. In addition, during the melt kneading, it is desirable to perform open degassing in which degassed substance is removed via a release port (vent) at normal pressure, and to perform reduced-pressure degassing in which degassed substance is removed via a release port (vent) at reduced pressure as necessary.

The cylinder temperature during the melt kneading with an extruder is preferably set to 320 °C or lower, more preferably 300 °C or lower. The cylinder temperature is set in view that the residence time of molten resin in the extruder is desirably as short as possible.

The melt flow rate (MFR) of the purging compound for a resin processing machine of the present aspect under conditions of 280 °C and a load of 2.16 kg (in accordance with ISO 1133) is 30 g/10 min or less, preferably from 1 to 25 g/10 min, and more preferably from 3 to 20 g/10 min. If the MFR is greater than 30 g/10 min, flow of the purging compound becomes too high, causing excessive flow of the purging compound into a mold during cleaning while molding is being carried out, resulting in a problem such as overpack which may damage the machine. If the melt kneading is carried out with an excessive strength, the thermoplastic resin (A) and the additive (B) would degrade, resulting in an increase in the MFR, which may also reduce the cleaning effect. If the MFR is less than 1 g/10 min, short shots tend to occur during cleaning while molding is being carried out and residues in a hot runner tend to occur.

<Processing residue>

Processing residues in a resin processing machine that can be cleaned by the purging compound for a resin processing machine of the present aspect includes the resin (C) to be purged (resin used in the processing work), and may also include additives such as a dye and a pigment and degraded products (for example, thermally decomposed products, carbonized products, etc.) generated from the resin (C) to be purged or the like.

<Resin to be purged (C)>

The resin (C) to be purged is not limited as long as the SP value thereof (SP2) satisfies the specific conditions mentioned above, and examples include thermoplastic resins such as general-purpose resins, e.g., a styrene-based resin, a polyester-based resin, a polyolefin-based resin, a polyamide-based resin, a cellulose-based resin, polycarbonate, polymethacrylic acid esters; engineering plastics; and super engineering plastics, for examples.

<Cleaning method of inside of resin processing machine using purging compound for resin processing machine>

A resin processing machine to which the purging compound for a resin processing machine of the present aspect can be used is not limited as long as it is a resin processing machine that handles a thermoplastic resin such as an injection molding machine and an extruder. The purging compound of the present aspect is characterized by its high cleaning effect even in cleaning of the inside of a hot runner in a complicated shape.

Cleaning of the inside of a hot runner can be performed by heating the inside to the temperature at which the resin melts as in normal molding conditions, causing the purging compound to flow under the same molding conditions as those of the resin (C) to be purged, and removing it as a molded product. If a short shot occurs when the molding operation is carried out with the purging compound, the temperature of the hot runner can be increased by 10 to 30 °C.

When only the insides of a hot runner and a cavity are cleaned, the molten purging compound can be collected directly from the gate by allowing the purging compound to flow while the mold is opened.

Or, in the case where stains need not to be removed completely and processing residues (the resin (C) to be purged) remain inside to some extent, the purging compound of the present aspect will gradually penetrate the processing residues, so that a sufficient cleaning effect is achieved.

EXAMPLES

Hereinafter, the present disclosure will be described in more detail with reference to Examples and Comparative Examples. The present disclosure is not limited to the following examples unless the gist thereof is exceeded.

Components used in Examples and Comparative Examples are as follows.

<Thermoplastic resin (A)

(A-1) PET (polyethylene terephthalate)
(A-2) AS (styrene-acrylonitrile copolymer) (ratio of styrene:acrylonitrile was 70:30)
(A-3) PC (Polycarbonate)
(A-4) ABS (styrene-butadiene-acrylonitrile copolymer) (ratio of styrene:butadiene:acrylonitrile was 45:30:25)
(A-5) and (A-6) PS (polystyrene)
(A-7) LDPE (low density polyethylene)

The solubility parameters SP1 of (A-1) to (A-7) determined by the Fedors' estimation method and the melt flow rates (MFR) (g/10 min) measured under conditions of 280 °C and a load of 2.16 kg (in accordance with ISO 1133) are summarized in Table 1.

[Table 1]

| Thermoplastic resin (A) | | MFR [g/10 min] | SP1 [(cal/cm$^3$)$^{1/2}$] |
|---|---|---|---|
| A-1 | PET | 23 | 10.8 |
| A-2 | AS | 16 | 9.9 |
| A-3 | PC | 6 | 9.9 |
| A-4 | ABS | 18 | 9.8 |
| A-5 | PS | 12 | 9.3 |
| A-6 | PS | 40 | 9.3 |
| A-7 | LDPE | 6 | 7.7 |

<Non-ionic additive (B)>

(B-1) Glyceryl stearate
(B-2) Stearic acid amide
(B-3) Ethylene bis stearic acid amide
(B-4) Stearyl alcohol
(B-5) Stearic acid
(B-6) Isostearyl alcohol

<Other non-ionic additives>

(B-7) Polyethylene glycol (number average molecular weight: 10,000)
(B-8) Sodium dodecyl sulfate

The melting points or the softening points of (B-1) to (B-8), and the solubility parameter SP3 of (B-1) to (B-8) determined by the Fedors' estimation method and the solubility parameter SP4 of hydrophobic organic group R of (B-1) to (B-8) are summarized in Table 2.

[Table 2]

| Additive (B) and other additives | Melting point or softening point [°C] | SP3 $[(cal/cm^3)^{1/2}]$ | SP4 $[(cal/ctn^3)^{1/2}]$ | SP3 - SP4 $[(ca/cm^3)^{1/2}]$ |
|---|---|---|---|---|
| B-1 | 62 | 10.2 | 8.3 | 1.9 |
| B-2 | 100 | 9.8 | 8.3 | 1.5 |
| B-3 | 145 | 9.6 | 8.3 | 1.3 |
| B-4 | 60 | 9.5 | 8.3 | 1.2 |
| B-5 | 69 | 9.1 | 8.3 | 0.8 |
| B-6 | Liquid at normal temp | 8.8 | 7.7 | 1.1 |
| B-7 | 55 | 9.6 | 9.6 | 0.0 |
| B-8 | 206 | Unknown | Unknown | Unknown |

<Resin to be purged (C)>

(C-1) PA66 (polyamide 66)

(C-2) PET (polyethylene terephthalate)

(C-3) PBT (Polybutylene terephthalate)

(C-4) ABS (styrene-butadiene-acrylonitrile copolymer) (ratio of styrene:butadiene:acrylonitrile was 45:30:25)

(C-5) PC (Polycarbonate)

(C-6) PE (polyethylene)

The solubility parameters SP2 of (C-1) to (C-6) determined by the Fedors' estimation method are summarized in Table 3.

[Table 3]

| Resin (C) to be purged | | SP2 [(cal/cm$^3$)$^{1/2}$] |
|---|---|---|
| C-1 | PA66 | 11.1 |
| C-2 | PET | 108 |
| C-3 | PBT | 106 |
| C-4 | ABS | 9.18 |
| C-5 | PC | 9.9 |
| C-6 | PE | 7.7 |

The methods for measurement and evaluation of the purging compounds obtained in Examples and Comparative Examples are as follows.

[Performance evaluations]

(Extrudability)

During preparation of each resin composition in Examples and Comparative Examples, the shape of strands and pelletization from an extruder were observed and evaluated according to the following evaluation criteria.

[Evaluation criteria]

O (good): Strands were formed stably and the sizes of pellets were hence uniform.

× (poor): Strands were not formed stably and the sizes of pellets were thus not uniform.

Unstable formation of strands is generally undesirable because it is considered to be caused by degradation or uneven distribution of the additive (B), leading to variations in quality, uneven performance, etc.

(MFR)

The melt flow rate (MFR) (g/10 min) of pellets of each purging compound obtained in Examples and Comparative Examples was measured under the conditions of 280 °C and a load of 2.16 kg in accordance with ISO 1133.

(Cleanability)

The cleanability of each purging compound obtained in Examples and Comparative Examples was evaluated using an injection molding machine provided with a multi-cavity hot runner for 96 preforms. The mold clamping was set to 350 t and the cycle time of a single shot was set to 20 seconds.
The resin (C) to be purged used as the staining material was dyed blue by mixing 5% by mass of a master batch colored with phthalocyanine blue with respect to 100% of the resin (C) to be purged in order to identify switching to purging.
A sufficient amount of the colored resin (C) to be purged was made to flow inside the cylinder so that it adhered sufficiently to the inner wall of the injection molding machine, and complete replacement of the discharged resin by the blue resin was confirmed. Next, a molding operation was conducted in the similar manner, and it was confirmed that the hot runner and the cavity were also filled with the colored resin (C) to be purged.
Thereafter, each purging compound obtained in Examples and Comparative Examples was then fed into the cylinder so that the inside of the cylinder was cleaned first. To check the cleaning performance inside the cylinder, the nozzle tip on the cylinder side was moved away from the mold and only the colored resin (C) to be purged (stain) inside the cylinder was discharged, which was visually confirmed.
Next, after the cylinder cleaning was completed, the nozzle was touched to the mold and the purging compound was made to flow into the hot runner under the same conditions as normal molding conditions, so that cleaning was performed while molding was being carried out.

Because the amount of the purging compound varies depending on the type of the resin (C) to be purged, the evaluation was made through comparison of the amount of the purging compound with the amount of the product (natural product) required when a non-colored target resin (C) was made to flow.

[Evaluation Criteria]

◎ (excellent): The colored resin (C) to be purged was completely discharged, and was purged with an amount of 1/3 or less of the amount when the natural product was made to flow.

O (good): The colored resin (C) to be purged was completely discharged, and was purged with an amount of more than 1/3 to 1/2 or less of the amount when the natural product was made to flow.

△ (acceptable): The colored resin (C) to be purged was completely discharged and was purged with an amount of more than 1/2 to 1/1 or less of the amount when the natural product was made to flow.

✕ (poor): The colored resin (C) to be purged was not completely discharged and remained even when purged with an amount of more than 1/1 of the amount when the natural product was made to flow.

(Non-remaining ability)

The non-remaining ability of the purging compound per se inside a cylinder and a hot runner was evaluated using an injection molding machine provided with a multi-cavity hot runner for 96 preforms. After purging work was conducted until the purging compound was discharged, an uncolored resin (C) to be purged (natural product) was made to flow inside the cylinder and the hot runner of the molding machine in this order, in the similar manner to the evaluation for cleanability described above, and replacement of the purging compound was visually evaluated.

[Evaluation criteria]

◎ (excellent): No purging compound remained, and when the resin (C) to be purged (natural product) was made to flow, replacement with the natural product occurred within 10 molding shots.

O (good): Almost no purging compound remained, and when the resin (C) to be purged (natural product) was made to flow, replacement with the natural product occurred within 11 or more and 20 or less molding shots.

△ (acceptable): The purging compound remained, but when the resin (C) to be purged (natural product) was made to flow, replacement with the natural product occurred within 21 or more and 40 or less molding shots.

✕ (poor): The purging compound remained, and replacement was difficult or 41 or more molding shots were required when the resin (C) (natural product) to be purged was made to flow.

(Examples 1 to 12 and Comparative Examples 1 to 6)

A resin composition containing the respective components at the ratios (% by mass) as listed in Table 4 was preliminarily mixed for 5 minutes using a tumbler blender, and the obtained mixture was melted and kneaded as such using a twin screw extruder (TEM58SS manufactured by Shibaura Machine Co., Ltd.). The extrusion conditions at this time were as follows: a cylinder setting temperature of 280 °C (200 °C only in Comparative Example 5 where A-7 resin was used alone) and a feed rate of 10 kg/hour. The melt kneaded product thus obtained was extruded into strand form, cooled with water, and then cut by a strand cutter to obtain a purging compound in pellet form.

(Comparative Example 7)

A purging compound was produced by mixing and dispersing B-2 and B-3 into A-2 for 5 minutes using a tumbler blender in the formulation ratios listed in Table 4.

Measurement and evaluation results of the obtained purging compound compositions are summarized in Table 4.

[Table 4]

| | Thermoplastic resin (A) | | | | | | | | Non-ionic additive (B) and other non-ionic additives | | | | | | | | | Resin (C) to be purged | | SP1 - SP2 | SP3 - SP2 | Extrudability | MFR | Cleanability | Non-remaining characteristic |
|---|---|---|---|---|---|---|---|---|---|---|---|---|---|---|---|---|---|---|---|---|---|---|---|---|---|
| | A-1 | A-2 | A-3 | A-4 | A-5 | A-6 | A-7 | SP1 | B-1 | B-2 | B-3 | B-4 | B-5 | B-6 | B-7 | B-8 | SP3 | Resin type | SP2 | | | | | | |
| | [% by mass] | | | | | | | $[(cal/cm^3)^{1/2}]$ | [% by mass] | | | | | | | | $[(cal/cm^3)^{1/2}]$ | [-] | $[(cal/cm^3)^{1/2}]$ | $[(cal/cm^3)^{1/2}]$ | $[(cal/cm^3)^{1/2}]$ | [-] | [g/10 min] | [-] | [-] |
| Example 1 | 97 | | | | | | | 10.8 | 3 | | | | | | | | 10.2 | C-1 | 11.1 | -0.3 | -0.9 | ○ | 28 | ○ | ◎ |
| Example 2 | | 97 | | | | | | 9.9 | | 1 | 2 | | | | | | 9.7 | C-2 | 10.8 | -0.9 | -1.1 | ○ | 20 | ◎ | ◎ |
| Example 3 | | | 97 | | | | | 9.9 | | | | | 3 | | | | 9.1 | C-3 | 10.6 | -0.7 | -1.5 | ○ | 12 | ○ | ○ |
| Example 4 | | | | 95 | | | | 9.8 | | | | 5 | | | | | 9.5 | C-4 | 9.8 | 0.0 | -0.3 | ○ | 22 | ○ | ◎ |
| Example 5 | | | | | 95 | | | 9.3 | | | | | | 5 | | | 8.8 | C-4 | 9.8 | -0.5 | -1.0 | ○ | 17 | ○ | ◎ |
| Example 6 | 20 | 77 | | | | | | 9.8 | | | 3 | | | | | | 9.6 | C-2 | 10.8 | -1.0 | -1.2 | ○ | 25 | ◎ | ◎ |
| Example 7 | | 20 | 78 | | | | | 9.7 | | 2 | | | | | | | 9.8 | C-2 | 10.8 | -1.1 | -1.0 | ○ | 15 | ○ | ○ |
| Example 8 | 47 | | 50 | | | | | 10.0 | 1 | 1 | | | | | 1 | | 9.9 | C-3 | 10.6 | -0.6 | -0.7 | ○ | 19 | ○ | ◎ |
| Example 9 | | 27 | | | 70 | | | 9.2 | | | | 2 | 1 | | | | 9.3 | C-5 | 9.9 | -0.7 | -0.6 | ○ | 18 | ○ | ◎ |
| Example 10 | | 75 | | | 20 | | | 9.3 | | | | | 3 | 2 | | | 9.0 | C-4 | 9.8 | -0.5 | -0.8 | ○ | 22 | ◎ | ◎ |
| Example 11 | 20 | 75 | | | | | | 9.6 | | | | 4 | | | 1 | | 9.6 | C-2 | 10.8 | -1.2 | -1.2 | ○ | 25 | ○ | ◎ |
| Example 12 | | 95 | | | | | | 9.9 | | | | 4 | | | 1 | | 9.6 | C-1 | 11.1 | -1.2 | -1.5 | ○ | 26 | △ | ○ |
| Comp. Ex. 1 | 85 | | | | | | | 10.8 | 15 | | | | | | | | 10.2 | C-2 | 10.8 | 0.0 | -0.6 | × | 46 | × | △ |
| Comp. Ex. 2 | | | | | 95 | | | 9.3 | | | | | | 5 | | | 8.8 | C-4 | 9.8 | -0.5 | -1.0 | × | 51 | △ | ○ |
| Comp. Ex. 3 | | | 95 | | | | | 9.9 | | | | | | | 5 | | 9.6 | C-3 | 10.6 | -0.7 | -1.0 | × | 16 | △ | △ |
| Comp. Ex. 4 | | | | | | 95 | | 7.7 | | | | | 5 | | | | 9.1 | C-2 | 10.8 | -3.1 | -1.7 | × | 14 | × | △ |
| Comp. Ex. 5 | | 97 | | | | | | 9.9 | | 1 | 2 | | | | | | 9.7 | C-6 | 7.7 | 2.2 | 2.0 | ○ | 20 | △ | × |
| Comp. Ex. 6 | 92 | | | | | | | 10.8 | | | | | | | | 8 | Unknown | C-2 | 10.8 | 0.0 | Unknown | × | 60 | △ | △ |
| Comp. Ex. 7 | | 97 | | | | | | 9.9 | | 1 | 2 | | | | | | 9.7 | C-2 | 10.8 | -0.9 | -1.1 | - | - | △ | × |

12

From the evaluation results, it was seen that purging compounds containing a thermoplastic resin (A) and a non-ionic additive (B) having solubility parameters close to that of a resin (C) to be purged had better cleanability and non-remaining characteristic. Further, by controlling the solubility parameters of the thermoplastic resin (A) and the non-ionic additive (B), the non-ionic additive (B) was made to be uniformly dispersed during extrusion, which prevented reduction in the cleaning performance caused by extreme bleed-out and reduced viscosity.

INDUSTRIAL APPLICABILITY

According to the present disclosure, design of the combination of a resin and additives constituting a purging compound for a resin processing machine can be easily made based on solubility parameters, and the inside of a very complicated hot runner can be favorably cleaned. A purging compound can be prepared in a manner that it is tailored to the type of the resin to be purged.

**Claims**

1. A purging compound for removing a processing residue comprising a resin (C) to be purged, from a resin processing machine, the purging compound comprising:

   a thermoplastic resin (A) and a non-ionic additive (B) represented by the following Formula (I) having a melting point or a softening point of lower than 150 °C:

   $$Rn\text{-}X \ ... \qquad\qquad (I)$$

   (in Formula (I), R is a hydrophobic organic group, n is an integer of 1 or more, and X is a polar group),
   wherein a melt flow rate (MFR) under conditions of 280 °C and a load of 2.16 kg is 30 g/10 min or less,
   a difference (SP1 - SP2) between a solubility parameter (SP1) of the thermoplastic resin (A) and a solubility parameter (SP2) of the resin (C) to be purged is from +1.6 to -1.6 $(\text{cal/cm}^3)^{1/2}$,
   a difference (SP3 - SP2) between a solubility parameter (SP3) of the non-ionic additive (B) and the SP2 is from +1.6 to -1.6 $(\text{cal/cm}^3)^{1/2}$, and
   a difference (SP3 - SP4) between the SP3 and a solubility parameter (SP4) of the hydrophobic organic group R is 0.7 $(\text{cal/cm}^3)^{1/2}$ or more.

2. The purging compound for a resin processing machine according to claim 1, wherein the thermoplastic resin (A) comprises at least one selected from the group consisting of a styrene-based resin and a polyester-based resin.

3. The purging compound for a resin processing machine according to claim 1 or 2, wherein the thermoplastic resin (A) comprises a styrene-based resin or a polyester-based resin, and a content of the styrene-based resin or the polyester-based resin in the purging compound for a resin processing machine is 40 % by mass or more.

4. The purging compound for a resin processing machine according to any one of claims 1 to 3, wherein the non-ionic additive (B) comprises a lubricant or a surfactant, and a content of the lubricant or the surfactant in the purging compound for a resin processing machine is 10% by mass or less.

5. The purging compound for a resin processing machine according to any one of claims 1 to 4, wherein the SP1 and the SP3 are from 9 to 11 $(\text{cal/cm}^3)^{1/2}$.

6. The purging compound for a resin processing machine according to any one of claims 1 to 5, wherein the resin (C) to be purged is a styrene-based resin and/or a polyester-based resin.

7. A method of cleaning an inside of a resin processing machine, the method comprising using the purging compound for a resin processing machine according to any one of claims 1 to 6.

8. Use of the purging compound for a resin processing machine according to any one of claims 1 to 6 in cleaning of a resin processing machine.

## INTERNATIONAL SEARCH REPORT

| International application No. |
|---|
| **PCT/JP2021/029198** |

**A. CLASSIFICATION OF SUBJECT MATTER**

***B08B 3/08***(2006.01)i; ***C11D 17/06***(2006.01)i; ***C08L 25/04***(2006.01)i; ***C08L 67/00***(2006.01)i; ***C08L 101/00***(2006.01)i; ***C11D 1/66***(2006.01)i; ***C11D 3/37***(2006.01)i; ***B29C 33/72***(2006.01)i

FI: B29C33/72; C11D1/66; C11D17/06; C08L101/00; C08L25/04; C08L67/00; B08B3/08 A; C11D3/37

According to International Patent Classification (IPC) or to both national classification and IPC

**B. FIELDS SEARCHED**

Minimum documentation searched (classification system followed by classification symbols)

B08B3/08; C11D17/06; C08L25/04; C08L67/00; C08L101/00; C11D1/66; C11D3/37; B29C33/72

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2012-121953 A (DAICEL POLYMER LIMITED) 28 June 2012 (2012-06-28) claims, examples | 1-8 |
| A | US 2016/0288374 A1 (CANON KABUSHIKI KAISHA) 06 October 2016 (2016-10-06) entire text, all drawings | 1-8 |

☐ Further documents are listed in the continuation of Box C.　　☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **19 August 2021** | **19 October 2021** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

INTERNATIONAL SEARCH REPORT
Information on patent family members

International application No.

**PCT/JP2021/029198**

| Patent document cited in search report | | | Publication date (day/month/year) | Patent family member(s) | Publication date (day/month/year) |
|---|---|---|---|---|---|
| JP | 2012-121953 | A | 28 June 2012 | (Family: none) | |
| US | 2016/0288374 | A1 | 06 October 2016 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4954397 B
- JP 4376648 B
- JP S62195045 A
- JP H02206636 A

**Non-patent literature cited in the description**

- **R. F. FEDORS.** *Polym. Eng. Sci.,* 1974, vol. 14 (2), 147-154